# EUROPÄISCHE PATENTANMELDUNG

(11) **EP 4 201 206 A1**
(43) Veröffentlichungstag der Anmeldung: **28.06.2023**
(21) Anmeldenummer: 22213509.7
(22) Anmeldetag: 14.12.2022
(51) Int. Cl.: A21B 1/26

(54) **BACKOFEN**

(30) Priorität: 27.12.2021 DE 102021215047
(71) Anmelder: BackNet GmbH, 33649 Bielefeld (DE)
(72) Erfinder: Dannenhauer, Bernd, 91550 Dinkelsbühl (DE); Adams, Christoph, 50259 Pulheim (DE)
(74) Vertreter: Rau, Schneck & Hübner Patentanwälte Rechtsanwälte PartGmbB

(57) **Zusammenfassung**

Ein Backofen (1) hat mindestens einen Backraum (3) mit mindestens einer Oberhitze-Steinplatte (4) und mindestens einer Unterhitze-Steinplatte (5). Eine Backpausen-Wärmequelle (9) dient zum Aufheizen der Steinplatten (4, 5) über Verbrennungsgase (10) während einer Backpause, in der der Backraum (3) nicht zum Backen genutzt wird. Eine Verbrennungsgas-Führung führt die Verbrennungsgase (10) von der Backpausen-Wärmequelle (9) auf einem Führungs-Hinweg (11) über eine Hinweg-Plattenseite (12) und auf einem Führungs-Rückweg (13) über eine Rückweg-Plattenseite (14) mindestens einer der Steinplatten (4). Die Rückweg-Plattenseite (14) liegt der Hinweg-Plattenseite (12) gegenüber. Es resultiert ein Backofen mit verbesserter Energieeffizienz.

## Beschreibung

Die vorliegende Patentanmeldung nimmt die Priorität der deutschen Patentanmeldung DE 10 2021 215 047.0 in Anspruch, deren Inhalt durch Bezugnahme hierin aufgenommen wird.

Die Erfindung betrifft einen Backofen, ausgeführt als Steinbackofen.

Ein derartiger Backofen ist vom Markt her bekannt. Die DE 29 17 072 A1 offenbart ein Brennaggregat mit einem Druckzerstäuberbrenner zur Beheizung einer Koch- oder Bratfläche. Die WO 99/05457 A1 offenbart einen Brat- und/oder Backofen.

Es ist eine Aufgabe der vorliegenden Erfindung, eine Energieeffizienz eines derartigen Backofens zu verbessern.

Die Aufgabe ist erfindungsgemäß gelöst durch einen Backofen mit den im Anspruch 1 angegebenen Merkmalen.

Erfindungsgemäß kommen beide gegenüberliegenden Plattenseiten der über die Verbrennungsgas-Führung beheizten Steinplatte, also die Hinweg-Plattenseite und die gegenüberliegende Rückweg-Plattenseite, im Laufe der Verbrennungsgas-Führung mit den Verbrennungsgasen in Kontakt. Es ergibt sich eine verbesserte Energieausnutzung der Verbrennungsgase. Es ergibt sich insbesondere eine Vergrößerung einer Kontaktfläche der heißen Verbrennungsgase mit der Steinplatte. Zudem kann eine kürzere Aufheizzeit des Backofens und insbesondere eine kürzere Laufzeit der Backpausen-Wärmequelle erreicht werden. Ein Wirkungsgrad kann verbessert werden, da die Verbrennungsgase längs der Verbrennungsgas-Führung mit dem Führungs-Hinweg und dem Führungs-Rückweg stärker abgekühlt werden. Bei dem Backofen kann es sich um einen industriellen Backofen oder um einen Backofen für einen Handwerksbetrieb handeln. Bei der Backpausen-Wärmequelle kann es sich um eine holzbefeuerte oder um eine gasbefeuerte Wärmequelle handeln. Der Backofen kann als direkt befeuerter Backofen ausgestaltet sein, bei dem die Verbrennungsgase direkt durch den Backraum geführt werden.

Bei einer Ausgestaltung der beidseitig über die Verbrennungsgase der beheizten Steinplatte als Oberhitze-Steinplatte nach Anspruch 2 kommen die Vorteile der Erfindung besonders gut zum Tragen, da die Oberhitze-Steinplatte im Backraum regelmäßig die größte Wärmespeichermasse darstellt. Diese Oberhitze-Wärmespeichermasse kann doppelt so groß sein wie diejenige der Unterhitze-Steinplatte.

Bei einer Verbrennungsgas-Führung nach Anspruch 3 ergibt sich eine besonders gute Nutzung der Energie der Verbrennungsgase, da die dem Backraum zugewandte Hinweg-Plattenseite mit den heißeren Verbrennungsgasen im Vorlauf auf dem Hinweg in Kontakt kommt.

Eine Aufhängung der Oberhitze-Steinplatte nach Anspruch 4 ergibt einen Verbrennungsgas-Führungskanal zwischen der dem Backraum abgewandten Seite der Oberhitze-Steinplatte und der oberen Gehäusewand. Soweit es sich bei der oberen Gehäusewand um eine Außenwand des Backofens handelt, kann diese Gehäusewand entsprechend gut wärmeisoliert sein.

Eine Umlenkung der Verbrennungsgas-Führung nach Anspruch 5 kann türseitig erfolgen. Eine derartige Umlenkung direkt im Stirnseitenbereich der Steinplatte führt zu einer guten Energieeffizienz.

Eine Aufteilung der Verbrennungsgas-Führung nach Anspruch 6 ermöglicht eine gleichmäßige Strömung im Führungs-Rückweg der Verbrennungsgas-Führung über eine gesamte Backraum-Breite der über die Verbrennungsgase beheizten Steinplatte. Der Backofen kann alternativ auch genau einen Abluft-Kamin oder ggf. auch mehr als zwei Abluft-Kamine aufweisen.

Eine Unterteilung der Oberhitze-Steinplatte nach Anspruch 7 hat sich in der Praxis bewährt und verringert die Herstellungskosten des Backofens.

Entsprechendes gilt für eine vergleichsweise geringe Plattendicke der Oberhitze-Steinplatte nach Anspruch 8. Diese Plattendicke kann höchstens 150 mm, kann höchstens 120 mm und kann höchstens 100 mm betragen. Die Plattendicke ist regelmäßig mindestens 50 mm.

Eine Etagen-Ausführung nach Anspruch 9 führt zu einem entsprechend erhöhten Ofendurchsatz. Für jeden der Etagen-Backräume kann eine individuelle Backpausen-Wärmequelle vorgesehen sein. Alternativ kann eine gemeinsame Backpausen-Wärmequelle für mehrere Etagen-Backräume vorgesehen sein.

Ein Pelletsbrenner, der mit Holzpellets beheizt werden kann, hat sich in der Praxis als Backpausen-Wärmequelle bewährt.

Ein Dampferzeuger nach Anspruch 11 kann eine Backperformance des Backofens verbessern. Der Dampferzeuger kann von der Backpausen-Wärmequelle beheizt werden, was die Energieeffizienz bzw. den Wirkungsgrad des Backofens weiter erhört. Hierzu kann ein Wärmetauscher genutzt werden, der von der Backpausen-Wärmequelle beheizt wird. Im einfachsten Fall kann der Wärmetauscher gebildet sein durch eine Wandung eines Kanals des Dampferzeugers, indem diesem Wasser zugeführt wird.

Ein Ausführungsbeispiel der Erfindung wird nachfolgend anhand der Zeichnung erläutert. In dieser zeigen:
- Fig. 1: schematisch eine perspektivische Ansicht eines industriellen Backofens, von dem lediglich ein Backraum sowie Komponenten einer Verbrennungsgas-Führung dargestellt sind;
- Fig. 2: einen vertikalen Querschnitt gemäß Linie II-II in Fig. 1;
- Fig. 3: einen vertikalen Längsschnitt durch eine Backkammer des Backofens nach Fig. 1; und
- Fig. 4: vergrößert das Detail IV in Fig. 3, wobei zudem schematische Temperaturkurven einer Temperatur einer Oberhitze-Steinplatte beim Betrieb einer Backpausen-Wärmequelle des Backofens gezeigt sind.

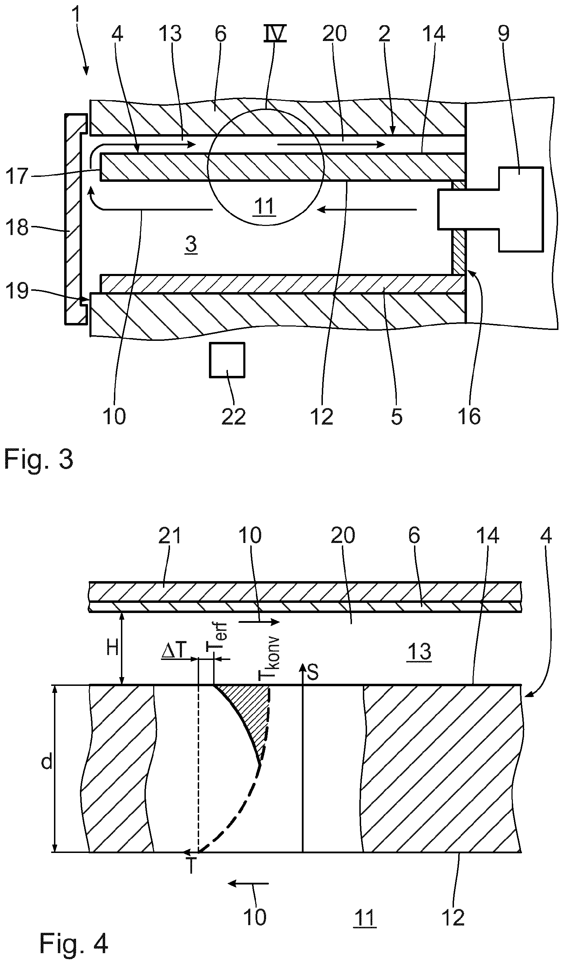

Ein industrieller Backofen 1 hat eine Backkammer 2 (vgl. Fig. 3) mit einem Backraum 3.

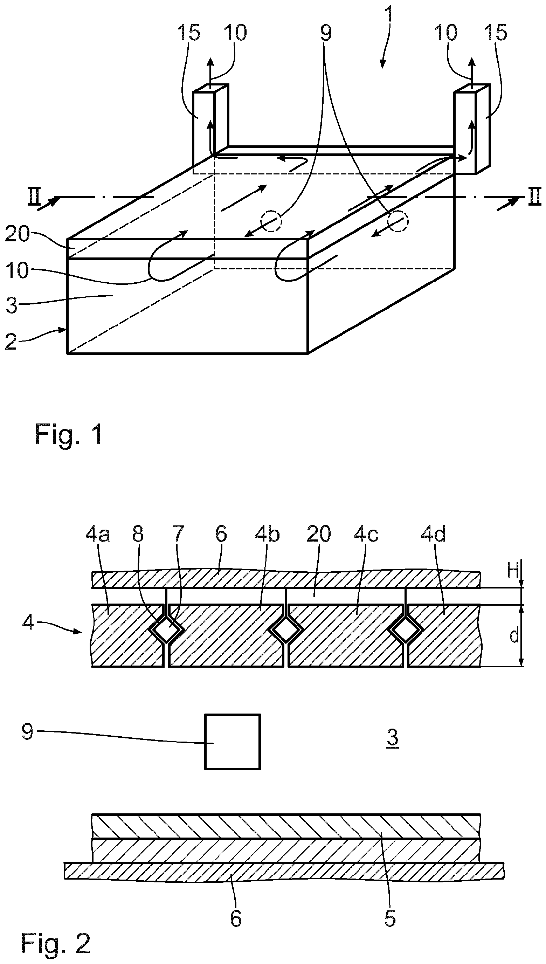

Der Backraum 3 ist nach oben hin durch eine Oberhitze-Steinplatte 4 mit mehreren Oberhitze-Teil-Steinplatten 4a, 4b, 4c, 4d, ... (vgl. Fig. 2) und nach unten hin durch eine Unterhitze-Steinplatte 5 begrenzt. Die Oberhitze-Steinplatte 4 ist unter einem Abstand H (vgl. Fig. 2) zu einer oberen Gehäusewand 6 des Backraums 3 bzw. der Backkammer 2 aufgehängt. Hierzu dienen Aufhängeleisten 7, die an der oberen Gehäusewand 6 befestigt sind und einen Profilquerschnitt haben, der komplementär zu Hinterschnitt-Profilabschnitten 8 der Teil-Steinplatten 4a bis 4d, ... ausgeführt sind. Bei der Montage des Backofens 1 werden die Teil-Steinplatten 4a bis 4d, ... zwischen zwei Benachbarte der Aufhängeleisten 7 eingeschoben und ergänzen sich zur Oberhitze-Steinplatte 4.

Die Oberhitze-Steinplatte 4 hat eine Plattendicke d, die kleiner ist als 160 mm. Die Plattendicke d kann kleiner sein als 150 mm, kann kleiner sein als 120 mm, kann kleiner sein als 100 mm und ist regelmäßig größer als 50 mm.

Der Backofen 1 hat einen Pelletsbrenner 9 als holzbefeuerte Backpausen-Wärmequelle. Der Pelletsbrenner 9 dient zum Aufheizen der Steinplatten 4, 5 über Verbrennungsgase 10 (vgl. Fig. 1, 3 und 4) während einer Backpause, in der der Backraum nicht zum Backen genutzt wird.

Der Backofen 1 hat eine Verbrennungsgas-Führung, die die Verbrennungsgase 10 von der Backpausen-Wärmequelle 9 auf einen Führungs-Hinweg 11 über eine dem Backraum 3 zugewandte Seite der Oberhitze-Steinplatte 4, die entsprechend eine Hinweg-Plattenseite 12 darstellt, und auf einem Führungs-Rückweg 13 über eine dem Backraum 3 abgewandte Seite der Oberhitze-Steinplatte 4, die eine Rückweg-Plattenseite 14 bildet, hin zu einer Gasabführung führt. Entsprechend ist die Rückweg-Plattenseite 14 der Oberhitze-Steinplatte 4 der Hinweg-Plattenseite 12 gegenüberliegend angeordnet. Die Gasabführung ist gebildet durch zwei seitlich angeordnete Abluftkamine 15.

Der Pelletsbrenner 9 ist im Bereich einer Backofen-Rückseite 16 angeordnet. Auch die beiden Abluftkamine 15 sind im Bereich der Backofen-Rückseite 16 angeordnet.

Eine Umlenkung der Verbrennungsgas-Führung vom Führungs-Hinweg 11 hin zum Führungs-Rückweg 13 erfolgt direkt im Bereich einer Stirnseite 17 der Steinplatte 4 (vgl. Fig. 3). Diese Umlenkung im Bereich der Stirnseite 17 erfolgt im Bereich einer Backraumtür 18, die die Verbrennungsgasführung abschnittsweise begrenzt. Die Backraumtür 18 ist an einer Backofen-Vorderseite 19 angeordnet.

Teil der Verbrennungsgas-Führung ist ein Verbrennungsgas-Führungskanal 20 zwischen der dem Backraum abgewandten Rückweg-Plattenseite 14 der Oberhitze-Steinplatte 4 und der oberen Gehäusewand 6 der Backkammer 2.

Die obere Gehäusewand 6 hat, soweit es sich hierbei um eine Außenwand des Backofens 1 handelt, eine Wärmeisolierung 21 (vgl. Fig. 4).

Durch die Verbrennungsgas-Führung mit dem Führungs-Hinweg 11 entlang der Hinweg-Plattenseite 12 und dem Führungs-Rückweg 13 entlang der gegenüberliegenden Rückweg-Plattenseite 14 kommen diese beiden gegenüberliegenden Plattenseiten 12, 14 der Oberhitze-Steinplatte 4 mit den Verbrennungsgasen in Kontakt. Dies beschleunigt eine Aufheizung der Oberhitze-Steinplatte 4, wie über die Temperaturprofile der Fig. 4 veranschaulicht ist.

Gestrichelt ist dabei eine Temperaturkurve angedeutet, die resultieren würde, wenn die Oberhitze-Steinplatte 4 ausschließlich über den Führungs-Hinweg 11 durch die Verbrennungsgase 10 geheizt würde. In einer Anfangsphase eines solchen Aufheizvorgangs wäre eine Temperatur der den Backraum 3 zugewandten Plattenseite 12 sehr deutlich höher als eine Temperatur Tₖₒₙᵥ der Oberhitze-Steinplatte 4 an der dem Backraum 3 abgewandten Plattenseite 14. Aufgrund der zusätzlichen Beheizung auch der Rückweg-Plattenseite 14 über den Führungs-Rückweg 13 längs des Verbrennungsgas-Führungskanals 20 ergibt sich schon der Anfangsphase des Aufheizvorgangs der Oberhitze-Steinplatte 4 auch im Bereich der Rückweg-Plattenseite 14 eine deutliche Temperaturerhöhung (vgl. durchgezogene Linie in der Fig. 4) auf eine Temperatur T_{erf}.

Da die Verbrennungsgase 10 längs des Führungs-Rückwegs 13 eine niedrigere Temperatur haben als längs des Führungs-Hinwegs 11, ist diese Temperatur T_{erf}, die anfänglich an der Rückweg-Plattenseite 14 erreicht wird, um eine Temperaturdifferenz ΔT niedriger als eine maximale Temperatur T der Hinweg-Plattenseite 12. Ein Vergleich der durchgezogenen Temperaturkurve, die anfänglich beim Aufheizen der Oberhitze-Steinplatte 4 durch Verwendung der Verbrennungsgas-Führung mit dem Führungs-Hinweg 11 und dem Führungs-Rückweg 13 resultiert, mit der konventionellen Temperaturkurve, die dann resultiert, wenn ausschließlich die backraumseitige Plattenseite 12 von den Verbrennungsgasen erwärmt wird, zeigt, dass die Oberhitze-Steinplatte 4 bei der beschriebenen Verbrennungsgas-Führung mit dem Führungs-Hinweg 11 und dem Führungs-Rückweg 13 schneller durchgeheizt wird und damit der Backofen 1 schneller zur Backnutzung zur Verfügung steht (vgl. die schraffiert veranschaulichte Wärmemenge in der Fig. 4). Die Energieausnutzung der Verbrennungsgase 10 ist entsprechend verbessert.

Am Ende des Führungs-Rückwegs 13 erfolgt eine Aufteilung der Verbrennungsgas-Führung zwischen dem Führungs-Rückweg 13 und den beiden Abluftkaminen 15. Es ergibt sich eine gleichmäßige Strömung der Verbrennungsgase im Führungs-Rückweg 13 über eine gesamte Breite der Oberhitze-Steinplatte 4.

Der Backofen 1 hat zudem noch einen in der Fig. 3 schematisch dargestellten Dampferzeuger 22 zur Erzeugung von Backschwaden, die dem Backraum 3 gesteuert zugeführt werden können. Der Dampferzeuger 22 kann ebenfalls über die Verbrennungsgase 10 der Backpausen-Wärmequelle 9 beheizt werden. Hierzu kann ein entsprechender Wärmetauscher des Dampferzeugers 22 genutzt werden. Hierzu können die Verbrennungsgase nach der Führung über den Führungs-Rückweg 13 durch eine geeignete Verbrennungsgasführung wieder nach vorne hin zur Backofen-Vorderseite 19 geführt werden. Bei dieser Führung der Verbrennungsgase können diese über einen entsprechenden Dampferzeuger-Wärmetauscher geführt werden, bei dem es sich im einfachsten Fall um eine Wandung eines Rohrs oder Kanals handeln kann, über den dem Dampferzeuger 22 Wasser zugeführt wird.

Der Backofen 1 kann als Etagen-Backofen ausgeführt sein. In diesem Fall hat der Backofen 1 mehrere Backkammern 2 nach Art derjenigen, die in der Fig. 3 dargestellt ist, die dann etagenweise übereinander angeordnet sind. Ein derartiger Etagen-Backofen hat entsprechend dann mehrere Backräume 3. Jedem dieser Etagen-Backräume 3 kann mindestens eine individuellen Backpausen-Wärmequelle nach Art des Pelletsbrenner 9 zugeordnet sein. Alternativ ist es möglich, mehrere Backräume mit ein und derselben Backpausen-Wärmequelle zu beheizen.

## Patentansprüche

1. Backofen (1)
- mit mindestens einem Backraum (3) mit mindestens einer Oberhitze-Steinplatte (4) und mindestens einer Unterhitze-Steinplatte (5),
- mit einer Backpausen-Wärmequelle (9) zum Aufheizen der Steinplatten (4, 5) über Verbrennungsgase (10) während einer Backpause, in der der Backraum (3) nicht zum Backen genutzt wird,
- mit einer Verbrennungsgas-Führung, die die Verbrennungsgase (10) von der Backpausen-Wärmequelle (9) auf einem Führungs-Hinweg (11) über eine Hinweg-Plattenseite (12) mindestens einer der Steinplatten (4) und auf einem Führungs-Rückweg (13) über eine Rückweg-Plattenseite (14) dieser Steinplatte (4) führt, die der Hinweg-Plattenseite (12) gegenüberliegt.

2. Backofen, nach Anspruch 1, **dadurch gekennzeichnet, dass** es sich bei der Steinplatte (4) mit der Hinweg-Plattenseite (12) und der Rückweg-Plattenseite (14) um die Oberhitze-Steinplatte handelt.

3. Backofen nach Anspruch 1 oder 2, **dadurch gekennzeichnet, dass** es sich bei der Hinweg-Plattenseite (12) der Steinplatte (4) um eine dem Backraum (3) zugewandte Seite und bei der Rückweg-Plattenseite (14) um eine dem Backraum (3) abgewandte Seite der Steinplatte (4) handelt.

4. Backofen nach einem der Ansprüche 1 bis 3, **dadurch gekennzeichnet, dass** die mindestens eine Oberhitze-Steinplatte (4) unter einem Abstand (H) zu einer oberen Gehäusewand (6) des Backraums (3) aufgehängt ist.

5. Backofen nach einem der Ansprüche 1 bis 4, **dadurch gekennzeichnet, dass** eine Umlenkung der Verbrennungsgas-Führung vom Führungs-Hinweg (11) zum Führungs-Rückweg (13) direkt im Bereich einer Stirnseite (17) der Steinplatte (4) erfolgt.

6. Backofen nach einem der Ansprüche 1 bis 5, **gekennzeichnet durch** eine Aufteilung der Verbrennungsgas-Führung zwischen dem Führungs-Rückweg (13) und mindestens zwei Abluft-Kaminen (15).

7. Backofen nach einem der Ansprüche 1 bis 6, **gekennzeichnet durch** eine Mehrzahl von Oberhitze-Teil-Steinplatten (4a bis 4d), die gemeinsam die mindestens eine Oberhitze-Steinplatte (4) bilden.

8. Backofen nach einem der Ansprüche 1 bis 7, **dadurch gekennzeichnet, dass** die mindestens eine Oberhitze-Steinplatte (4) des Backraums (3) eine Plattendicke von höchstens 160 mm aufweist.

9. Backofen nach einem der Ansprüche 1 bis 8, **gekennzeichnet durch** eine Ausführung als Etagen-Backofen mit mindestens zwei der Backräume (3), die übereinander angeordnet sind.

10. Backofen nach einem der Ansprüche 1 bis 9, **dadurch gekennzeichnet, dass** es sich bei der Backpausen-Wärmequelle (9) um mindestens einen Pelletsbrenner handelt.

11. Backofen nach einem der Anspruch 1 bis 10, **gekennzeichnet durch** einen Dampferzeuger (22) zur Erzeugung von Schwaden.
